# EUROPEAN PATENT APPLICATION

(11) **EP 4 592 413 A1**
(43) Date of publication of application: **30.07.2025**
(21) Application number: 23868029.2
(22) Date of filing: 01.09.2023
(51) Int. Cl.: C22B 1/24, C22B 5/02, C22B 7/00, H01M 10/54

(54) **METHOD FOR RECOVERING VALUABLE METALS**

(30) Priority: 20.09.2022 JP 2022149108
(71) Applicant: SUMITOMO METAL MINING CO., LTD., Tokyo 105-8716 (JP)
(72) Inventor: NAGAKURA, Toshihiko, Niihama-shi, Ehime 792-0002 (JP); HAGIO, Tomoya, Niihama-shi, Ehime 792-0002 (JP)
(74) Representative: Jones, Nicholas Andrew
(86) International application number: PCT/JP2023/032077
(87) International publication number: WO 2024/062905

(57) **Abstract**

Provided is a method capable of suppressing generation of dust during handling of a mixed powder of positive electrode active material and negative electrode active material, which is the raw material to be processed in the method for recovering valuable metals, and reducing recovery loss of valuable metals due to carry over that occurs when processing the mixed powder. The present invention is a method for recovering valuable metals, wherein the method includes a preparation step S1 that prepares a raw material containing waste lithium-ion batteries, and a granulated material is prepared from a mixed powder in the preparation step S1 by implementing a preliminary kneading step S13 that adds water to a mixed powder containing the positive electrode active materials and the negative electrode active materials that constitute the waste lithium-ion batteries and preliminarily kneads the mixture and a granulation step S14 that further kneads and granulates the preliminarily kneaded material. The amount of water added in the preliminary kneading step S13 is preferably adjusted to 0.14-0.16 by weight ratio relative to the mixed powder. Also, a twin-shaft paddle granulator is preferably used in the granulation step S14, with the circumferential speed of the paddle tips set at 50-90 m/min.

## Description

### TECHNICAL FIELD

The present invention relates to a method for recovering valuable metals from raw materials, such as discarded lithium ion batteries.

### BACKGROUND ART

In recent years, lithium ion batteries have become popular for their lightweight and high power. A well-known lithium ion battery has a structure including an outer case, and positive and negative electrode materials, a separator, and an electrolytic solution, which are sealed in the outer case. For example, the outer case includes a metal, such as iron (Fe) or aluminum (Al). The negative electrode material includes a negative electrode current collector (e.g., a copper foil) and a negative electrode active material (e.g., graphite) bonded to the current collector. The positive electrode material includes a positive electrode current collector (e.g., an aluminum foil) and a positive electrode active material (e.g., lithium nickelate, lithium cobaltate) bonded to the current collector. The separator includes, for example, a porous polypropylene resin film. The electrolytic solution contains an electrolyte, such as lithium hexafluorophosphate (LiPF₆).

Hybrid cars and electric vehicles are among the major applications of lithium ion batteries. According to the life cycle of such vehicles, therefore, a huge number of lithium ion batteries, which are now installed in them, are expected to be discarded in the future. Some lithium ion batteries are also discarded if found defective during the manufacturing process. It is desirable to reuse such used batteries and such defective batteries occurring in the manufacturing process (hereinafter such batteries will be referred to as "discarded lithium ion batteries") as a resource.

A technique for the reuse includes a pyrometallurgical process that includes, for example, entirely melting discarded lithium ion batteries in a high-temperature furnace (melting furnace). Another technique for the reuse includes a hydrometallurgical process including: mixing, into an acidic solution, a valuable metal-containing material obtained from discarded lithium ion batteries to form a solution; then adding a neutralizing agent to the resulting leachate to separate a post-neutralization solution and a neutralized precipitate from each other; subjecting the resulting post-neutralization solution to organic solvent extraction, for example, with an acidic extractant; and subjecting, to back extraction with a sulfuric acid solution, the organic solvent containing the extract.

Before the pyrometallurgical or hydrometallurgical process for the reuse, crushing intact discarded lithium ion batteries is dangerous because of the risk of explosion. In general, therefore, the discarded lithium ion batteries to be processed are subjected to a pretreatment. Such a pretreatment may include, for example, mechanically opening holes in the discarded lithium ion batteries with needle-shaped blades to allow the electrolytic solution to flow out. Alternatively, such a pretreatment may include heating the discarded lithium ion batteries to burn the electrolytic solution and thus to produce a harmless material. The pretreatment is followed by crushing the remaining material, classifying the crushed material into mixed powders of outer cases, copper foils, aluminum foils, and positive and negative electrode active materials, and then handling each resulting material as a raw material to be recycled.

The resulting mixed powder of positive and negative electrode active materials (hereinafter also referred to as "black mass") includes, for example, particles with sizes of several µm to several hundred µm. When handled or subjected to recycling, such a powder may cause dust or may be carried over, for example, due to reaction gas or convection generated during oxidative-reductive melting, which may reduce production efficiency.

For example, Patent Document 1 discloses that dust generated in the oxidative roasting process should be discharged outside the furnace and discarded. Such dust contains carried-over black mass, which suggests that the dust generation may increase the risk of valuable metal recovery loss.

### Citation List

### Patent Document

Patent Document 1: Japanese Unexamined Patent Application, Publication No. 2021-161455

### DISCLOSURE OF THE INVENTION

### Problems to be Solved by the Invention

It is an object of the present invention, which has been proposed under these circumstances, to provide a metal recovery method in which a mixed powder of positive and negative electrode active materials derived from discarded lithium ion batteries can be handled with reduced dust when supplied as a raw material to a pyrometallurgical or hydrometallurgical process, and can also undergo an oxidative roasting or reductive melting process with reduced carry-over and thus with reduced valuable metal recovery loss.

### Means for Solving the Problems

The inventors have made active investigations to solve the problem described above. As a result, the inventors have completed the present invention based on findings that, before being subjected to an oxidative roasting or reductive melting process or other processes, a mixed powder (black mass) of positive and negative electrode active materials should be granulated under specific conditions, so that the resulting granules can be well handled and processed with effectively reduced dust or carry-over.

(1) A first aspect of the present invention is directed to a valuable metal recovery method including: a preparation step including preparing a raw material from discarded lithium ion batteries containing a valuable metal, the preparation step including: a premixing step including adding water to a mixed powder including positive and negative electrode active materials derived from the discarded lithium ion batteries and premixing the water and the mixed powder to form a premix; and a granulation step including further mixing the premix to form granules from the mixed powder.
(2) A second aspect of the present invention is directed to the valuable metal recovery method according to the first aspect, wherein in the premixing step, the water is added with an adjusted weight ratio of the water to the mixed powder of 0.14 or more and 0.16 or less.
(3) A third aspect of the present invention is directed to the metal recovery method according to the first or second aspect, wherein the granulation step includes mixing and granulating the premix using a twin-shaft paddle granulator with its paddle head peripheral speed set to 50 m/minute or more and 90 m/minute or less.
(4) A fourth aspect of the present invention is directed to the valuable metal recovery method according to any one of the first to third aspects, wherein the valuable metal recovery method further includes a pyrometallurgical process including a reduction step that includes subjecting, to reductive melting, the granules resulting from the preparation step to form a reductive melting product including a valuable metal-containing alloy and a slag, wherein the premixing step of the preparation step further includes adding, to the mixed powder, a flux for use in the reductive melting; and subjecting the flux to the premixing.
(5) A fifth aspect of the present invention is directed to the valuable metal recovery method according to the fourth aspect, wherein in the premixing step, the flux has a particle size of 5 mm or less and is added with an adjusted weight ratio of the flux to the mixed powder of 0.1 or more and 0.2 or less.

### Effects of the Invention

According to the present invention, the mixed powder of positive and negative electrode active materials derived from discarded lithium ion batteries can be handled with reduced dust when supplied as a raw material to the valuable metal recovery process, and can also be subjected to oxidative roasting, reductive melting, or other processes with reduced carry-over and thus with reduced valuable metal recovery loss.

### BRIEF DESCRIPTION OF THE DRAWINGS

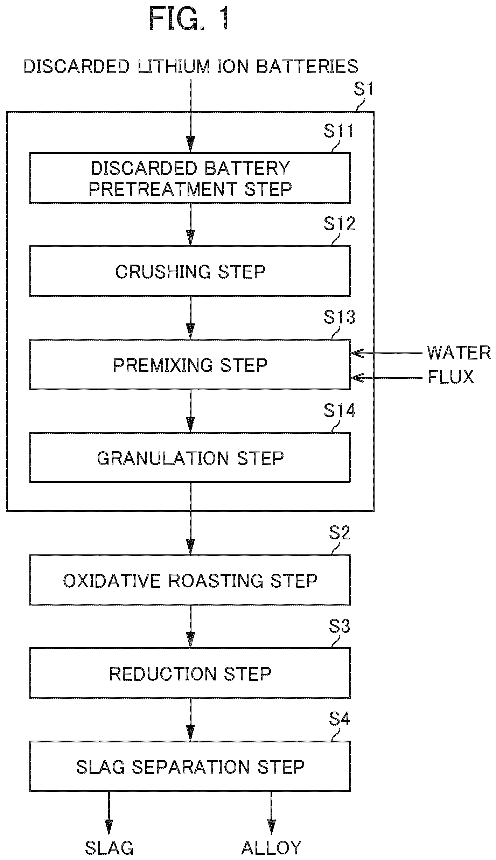

FIG. 1 is a flowchart showing a flow of a valuable metal recovery process based on a pyrometallurgical process.

### PREFERRED MODE FOR CARRYING OUT THE INVENTION

Hereinafter, specific embodiments of the present invention (hereinafter referred to as "embodiments") will be described in detail. It will be understood that the embodiments described below are not intended to limit the present invention and may be altered or modified in various ways without departing from the gist of the present invention.

A valuable metal recovery method according to an embodiment is a method for recovering valuable metals from discarded lithium ion batteries, which contain lithium (Li) and valuable metals (e.g., Cu, Ni, Co).

As used herein, the term "discarded lithium ion battery" is intended to include not only a used lithium ion battery but also a discarded material occurring in the process of manufacturing lithium ion batteries, such as a defective product occurring in the process of manufacturing secondary battery components such as positive electrode materials, some residues occurring in the manufacturing process, and generated refuses. Discarded lithium ion batteries contain valuable metals such as copper (Cu), nickel (Ni), and cobalt (Co).

Specifically, the method according to an embodiment includes a preparation step including preparing a raw material from discarded lithium ion batteries containing valuable metals. The preparation step includes a premixing step including adding water to a mixed powder including positive and negative electrode active materials derived from the discarded lithium ion batteries and premixing the water and the mixed powder to form a premix; and a granulation step including further mixing the premix to form granules from the mixed powder.

The prepared granules can be used as a raw material to be processed by the valuable metal recovery method and can be subjected to a pyrometallurgical process, a hydrometallurgical process, or a combination of pyrometallurgical and hydrometallurgical processes, in which valuable metals can be recovered in each process.

FIG. 1 is a flowchart showing an exemplary flow of a valuable metal recovery process based on a pyrometallurgical process. FIG. 1 shows a method including: a preparation step S1 including preparing a raw material from discarded lithium ion batteries; an oxidative roasting step S2 including oxidizing and roasting the raw material to form an oxidatively roasted product; a reduction step S3 including reducing and melting the oxidatively roasted product to produce a reductive melting product that includes a valuable metal-containing alloy and a slag; and a slag separation step S4 including separating the slag from the reductive melting product and recovering the alloy.

### (1) Preparation Step

The preparation step S1 includes preparing a raw material from discarded lithium ion batteries containing valuable metals. As mentioned above, discarded lithium ion batteries contain Li and valuable metals (e.g., Cu, Ni, Co) in addition to less-valuable metals (e.g., Al, Fe) and carbon components. Discarded lithium ion batteries may also contain phosphorus (P). Such discarded lithium ion batteries can be used as a raw material for efficient recovery of valuable metals. In this regard, the valuable metal is a recovery target including at least one metal or alloy selected from the group consisting of Cu, Ni, Co, and any combination thereof.

The discarded lithium ion batteries may be any type suitable for subsequent process steps. The preparation step S1 may include subjecting the discarded lithium ion batteries to crushing or other processing to form appropriately-shaped materials. The preparation step S1 may also include subjecting the discarded lithium ion batteries to heat treatment, segregation treatment, or any other treatment to remove unnecessary components, such as water and organic materials.

The preparation step S1 is a step for preparing a raw material from the discarded lithium ion batteries, which includes preparing a raw material to be processed by subsequent process steps (a material to be introduced into a processing furnace).

As shown in FIG. 1, for example, the preparation step S1 includes a discarded battery pretreatment step S11 including pretreating the discarded lithium ion batteries; a crushing step S12 including crushing the product resulting from the pretreatment step S11; a premixing step S13 including adding water to a mixed powder, which results from the crushing and includes positive and negative electrode active materials derived from the discarded lithium ion batteries, and mixing the water and the mixed powder to form a premix; and a granulation step S14 including further mixing the premix to form granules.

### [Discarded Battery Pretreatment Step]

The discarded battery pretreatment step S11 is performed in order to prevent explosion of discarded lithium ion batteries, to make discarded lithium ion batteries harmless, and to remove outer cases.

Lithium ion batteries have a sealed system in which the electrolytic solution and other components are contained. Crushing intact lithium ion batteries is dangerous because of the risk of explosion. Thus, some measures should preferably be taken for discharging and for removal of the electrolytic solution. The discarded battery pretreatment step S11 may be performed using any specific treatment method. For example, such a treatment method may include mechanically opening holes in the discarded batteries with needle-shaped blades to allow the electrolytic solution to flow out. Alternatively, such a treatment method may include heating the discarded lithium ion batteries to burn the electrolytic solution and thus to make them harmless.

Many discarded lithium ion batteries include, as their component, an outer case of a metal such as aluminum (Al) or iron (Fe), and such a metallic outer case is relatively easy to recover directly.

In that way, the discarded battery pretreatment step S11 removes the electrolytic solution and the outer case and thus increases safety and helps to recover valuable metals (e.g., Cu, Ni, Co) at high recovery ratio. The step S11 preferably includes separating the discarded lithium ion batteries into metallic outer cases and other battery components; and recovering aluminum outer cases from the metallic outer cases. The recovered aluminum outer cases may also be used as a reducing agent in the subsequent reduction step S3.

The discarded battery pretreatment step S11 may include recovering Al or Fe from the outer cases. In this case, the pretreatment step S11 may include crushing the removed outer cases; and then sieving the crushed products with a sieve shaker. Al can be efficiently recovered since Al cases can be easily crushed into a powder with low power. Fe may be recovered by magnetic force sorting from the crushed outer cases. In a preferred mode, the collected aluminum outer cases may be crushed into at least one type of form selected from the group consisting of lumps, grains, powders, and flakes.

### [Crushing Step]

The crushing step S12 includes crushing components of discarded lithium ion batteries to form crushed materials. In the crushing step S12, the crushing is performed to increase reaction efficiency. When the raw material can react with high efficiency, valuable metals (e.g., Cu, Ni, Co) can be recovered at high recovery ratio from the raw material.

In the crushing step S12, the crushing produces, for example, a mixed powder (black mass) including positive and negative electrode active materials derived from the discarded lithium ion batteries. The mixed powder, also called a black mass, contains valuable metals, which are components of the positive and negative electrode active materials. The mixed powder contains valuable metals (components of the positive and negative electrode active materials) enriched through the discarded battery pretreatment step S11 including the sieving step and any other treatment. Besides the valuable metals, the mixed powder also contains other element components, such as aluminum, iron, and carbon, as impurities.

The crushing may be performed using any specific method (crushing method). The crushing may be performed using a conventionally known crushing machine, such as a cutter mixer.

### [Premixing Step and Granulation Step]

The mixed powder obtained through the crushing step S12 is a powder of particles with sizes of several µm to several hundred µm, including positive and negative electrode active materials derived from the discarded lithium ion batteries. Such a powder can easily cause dust during handling or can be carried over due to reaction gas or convection generated in the subsequent steps, which may cause a loss of recovery of valuable metals from the mixed powder.

In the method according to an embodiment, therefore, the preparation step S1 includes the premixing step S13 including adding water to the mixed powder including positive and negative electrode active materials and premixing them to form a premix; and the granulation step S14 including further mixing the premix to form granules. In the method according to an embodiment, such steps are performed to produce granules from the mixed powder including positive and negative electrode active materials.

In the method according to an embodiment, the granules prepared through these steps are prevented from causing dust during handling when the raw material (the granules of the mixed powder) is processed by being subjected to the subsequent oxidative roasting step S2 or the reduction step S3. The granules are also prevented from being carried over so that loss can be prevented. Thus, valuable metals can be efficiently recovered with low recovery loss.

### (Premixing Step)

The premixing step S13 includes adding water to the mixed powder including positive and negative electrode active materials and premixing them. The premixing step S13 produces a premix including the mixed powder and water uniformly dispersed therein.

In general, the negative electrode active material in the mixed powder has a high graphite content. Therefore, if the mixed powder is directly subjected to granulation without the premixing of the premixing step S13, the mixed powder will tend to be insufficiently granulated so that the resulting granules will not be sufficiently prevented from causing dust. Thus, the main mixing and granulation of the mixed powder is preceded by the premixing step S13 that includes adding water to the mixed powder and premixing them, which will allow good granulation of the mixed powder and lead to effective prevention of dust.

In the premixing, the materials may be mixed using, for example, a batch kneader such as Brabender, a Banbury mixer, a Henschel mixer, a helical rotor, a roll, a single-shaft kneader, a twin-shaft kneader, a twin-shaft paddle kneader, or any other kneader. Such a kneader can efficiently apply shear force to the mixed powder, facilitate uniform mixing, and promote close contact between the particles. Moreover, as close contact is promoted, voids will decrease so that the granulation step S14 can achieve high granulation performance.

In the premixing step S13, the amount of water added to the mixed powder (addition amount) is preferably such that the weight ratio of the water to the mixed powder is in the range of 0.14 or more and 0.16 or less, although the addition amount may be any suitable value. This feature allows more efficient dispersion of the added water into the mixed powder, so that the granulation step S14 (described later) can achieve higher granulation performance.

The premixing may be performed for any appropriate time depending on the amount of the mixed powder being subjected to premixing. More preferably, the premixing time is set to 3 minutes or more. This allows reliable dispersion of water into the mixed powder and thus can prevent insufficient mixing.

The premixing step S13 may include adding a flux to the mixed powder. The flux is added for use in the reductive melting of the reduction step S3 (described later) in the valuable metal recovery method based on a pyrometallurgical process. The flux for such use may be added at the mixed powder-premixing stage in the premixing step S13 and then subjected to the subsequent granulation step S14 to form flux-containing granules.

Examples of the flux that can be used as appropriate include calcium carbonate (CaCO₃), calcium oxide (CaO), aluminum oxide (Al₂O₃), silicon oxide (SiO₂), magnesium oxide (MgO), and iron oxide (e.g., Fe₂O₃) .

The flux may be in the form of particles with any suitable diameter. Preferably, the flux particles have a diameter of 5 mm or less. The flux may be added in any amount. Preferably, the amount of the flux is adjusted such that the weight ratio of the flux to the mixed powder is in the range of 0.1 or more and 0.2 or less. In this case, the flux can be well mixed with the mixed powder so that relatively large granules with a diameter of 4 mm or more can be easily formed through the granulation step S14. The granulated product with a high content of such large granules with a diameter of 4 mm or more has further improved handleability and thus is more effectively prevented from causing dust and less likely to be carried over so that loss can be further reduced.

### (Granulation Step)

The granulation step S14 includes further mixing the premix resulting from the premixing step S13 to form granules. This step produces granules from the mixed powder including positive and negative electrode active materials.

In the granulation step S14, for example, the mixing (main mixing) and the granulation are preferably performed using a twin-shaft paddle granulator. The twin-shaft paddle granulator has a structure including: high-speed rotary shafts; paddles arranged spirally on the shafts; and a casing housing the shafts and the paddles.

A mixing and granulation process using the twin-shaft paddle granulator will be described. First, at the initial stage of the granulation, water films are formed on the surfaces of the particles in the premix by the paddle stirring action. The surface tension of the water film on a particle acts to catch other particles. This results in the formation of granulation nuclei. Subsequently, the further paddle stirring action makes water spread uniformly among the particles so that the formed granulation nuclei grow larger. As the granulation nuclei grow, they come to roll on the paddles and accordingly to form spherical granules having particles compressed together.

In the mixing and granulation process using the twin-shaft paddle granulator, the paddle head preferably has a peripheral speed of 50 m/minute or more and 90 m/minute or less, although the paddle head may have any suitable peripheral speed. At a paddle head peripheral speed of less than 50 m/minute, the particles may be compressed insufficiently and formed into granules with insufficient strength, which may collapse during handling. If the granules collapse, it will be difficult to prevent dust. A paddle head peripheral speed of more than 90 m/minute will allow formation of stronger granules but may require the facility to withstand a higher load and increase the risk of facility failure.

The mixing and granulation process may also include adding a binder, such as starch, to the mixed powder. The addition of the binder can increase granulation performance and allow formation of stronger granules.

The mixing and granulation process may be performed for any appropriate time depending on the amount of the premix being subjected to the process. Preferably, the mixing and granulation process time is set to 2 minutes or more. In this case, the content of small granules with a diameter of 1 mm or less in the resulting granules can be kept low (for example, the content of granules of 1 mm or less can be kept at less than 10%), which can avoid a difficulty in preventing low handleability-induced dust formation.

As described above, the method according to an embodiment includes the preparation step S1, which includes preparing a raw material (a material to be processed in a pyrometallurgical process described later) from discarded lithium ion batteries, and the preparation step S1 includes the premixing step S13, which includes adding water to the mixed powder including positive and negative electrode active materials derived from the discarded lithium ion batteries and premixing them to form a premix; and a granulation step S14, which includes further mixing the premix to form granules. This process produces granules with a specific size from the mixed powder.

Such granules prepared from the mixed powder can be handled and processed with high safety and effectively reduced dust when subjected to the oxidative roasting step S2 (oxidative roasting process) and the reduction step S3 (reductive melting process). During the process, any raw material powder is also prevented from being carried over due to reaction gas or convection, so that the valuable metals can be recovered with reduced loss.

Hereinafter, the oxidative roasting step S2 and the reduction step S3 of the valuable metal recovery method based on a pyrometallurgical process will be described one by one.

### (2) Oxidative Roasting Step

The oxidative roasting step S2 includes subjecting the raw material (the material to be introduced into the processing furnace) to oxidative roasting (oxidation treatment) to form an oxidatively roasted product.

In the method according to an embodiment, the granules obtained from the mixed powder through the preparation step S1 described above are introduced into a processing furnace, such as a roasting furnace, and subjected to oxidative roasting. In this embodiment, the material to be introduced, which is not in the form of a powder but in the form of granules produced from the mixed powder, can be effectively prevented from causing dust during handling at the time of introduction into the processing furnace and during introduction handling. In addition, dust collection-induced valuable metal loss can be reduced, and carry-over of valuable metals into exhaust gas can also be prevented during the oxidative roasting.

In the oxidative roasting step S2, the substances are oxidized with an oxidizing power that allows oxidation and removal of carbon (C) derived from the contents of the discarded lithium ion batteries and allows oxidation of at least aluminum. In general, main elements derived from the discarded lithium ion batteries are oxidized in the order of aluminum (Al) > lithium (Li) > carbon (C) > manganese (Mn) > phosphorus (P) > iron (Fe) > cobalt (Co) > nickel (Ni) > copper (Cu), depending on the difference in their affinity for oxygen.

Thus, the oxidative roasting step S2 may include subjecting the granules of the mixed powder to oxidative roasting to remove carbon from the granules. After the oxidative roasting step S2, therefore, the reduction step S3 allows locally generated fine particles of valuable metals to aggregate without physical interference by carbon particles and thus allows valuable metals to be gathered and recovered in the form of an alloy. In the reduction step S3 described later, if some carbon remains in the raw material, the carbon can physically interfere with the aggregation of melted fine particles resulting locally from reduction and melting of valuable metals. In other words, if oxidative roasting to remove carbon is not performed, the remaining carbon may interfere with the gathering of fine particles being melted and interfere with the subsequent separation between metals and slag to reduce the valuable metal recovery ratio. In contrast, when the reductive melting is preceded by the oxidative roasting to remove carbon, the fine particles being melted can smoothly gather and aggregate so that valuable metals can be recovered at higher recovery ratio.

In addition, when the oxidative roasting is performed to remove carbon, the reduction step S3 can be performed without carbon-induced reduction of phosphorous (P) (a component in the discarded lithium ion batteries) so that phosphorous (P) can be prevented from distributing into the valuable metal alloy.

The oxidative roasting step S2 preferably includes subjecting the granules (the raw material to be processed) to oxidative roasting with an oxidizing powder that allows oxidation of less-valuable metals (e.g., Al) in the granules. The oxidizing power can be easily controlled by controlling the oxidative roasting temperature, the oxidative roasting time, and/or the oxidative roasting atmosphere. In the oxidative roasting, therefore, the oxidizing power may be strictly controlled so that uneven oxidation can be prevented.

The oxidizing power may be controlled as described below. As mentioned above, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. In the oxidative roasting, the oxidation may be allowed to proceed until the whole amount of Al is oxidized. The oxidation may further be allowed to proceed until some Fe is oxidized while the oxidizing power is so limited as not to oxidize Co (valuable metal) into slag in the recovery process.

The oxidative roasting step may include introducing a suitable amount of an oxidizing agent for controlling the oxidizing power. In particular, the introduction of an oxidizing agent is preferred in the case where the raw material to be processed is derived from discarded lithium ion batteries. As mentioned above, the discarded lithium ion batteries contain metals, such as Al and Fe, as outer case materials, and also contain aluminum foils and carbon materials as positive and negative electrode materials. Some battery packs further include plastic outer packages. Since those materials can act as a reducing agent, the oxidative roasting step should include introducing an oxidizing agent to process those materials so that the oxidizing power can be controlled within a more appropriate range.

The oxidizing agent may be any suitable one capable of oxidizing carbon and low-valuable metals (e.g., Al). In particular, the oxidizing agent is preferably air, pure oxygen, an oxygen-enriched gas, or any other oxygen-containing gas, which is easy to handle. As a guide, the amount of the oxidizing agent introduced may be about 1.2 times (e.g., 1.15 times to 1.25 times) larger than its amount (chemical equivalent) required to oxidize each oxidation target substance.

The oxidative roasting preferably has a heating temperature of 700°C or more and 1,100°C or less, more preferably 800°C or more and 1,000°C or less. At 700°C or more, the oxidative roasting can oxidize carbon for a shorter time with a higher efficiency. At 1,100°C or less, the oxidative roasting can be performed at low thermal energy cost with high efficiency.

The oxidative roasting may be performed using a known roasting furnace. Preferably, the oxidative roasting is performed using a furnace (preliminary furnace) different from the melting furnace for the reductive melting in the reduction step S3 described later. The roasting furnace may be any type as long as it can roast and oxidize the material placed therein with an oxidizing agent (e.g., oxygen) supplied thereto. An example of the roasting furnace may be a conventionally known rotary kiln or a tunnel kiln (hearth furnace).

Alternatively, the oxidative roasting may be performed in the same furnace as that for the reduction step S3 (described later) before the reductive melting. In such a case, the oxidative roasting step S2 should not be necessarily performed independently.

### (3) Reduction Step

The reduction step S3 includes heating and reductively melting the oxidatively roasted product (resulting from the oxidative roasting step S2) to form a reductive melting product including a valuable metal-containing alloy and a slag. The reduction step S3 is performed to reduce and melt oxides of valuable metals (Cu, Ni, Co) for the recovery of an alloy including gathered valuable metals while maintaining oxides of less-valuable metals (e.g., Al) resulting from the oxidation in the oxidative roasting step S2.

In the method according to an embodiment, the oxidatively roasted product is obtained by the oxidative roasting (oxidative roasting step S2) of the granules of the mixed powder resulting from the preparation step S1. The raw material to be subjected to the reductive melting is not in the form of a powder. Thus, dust formation is effectively prevented during the handling of the raw material when it is provided and introduced into the processing furnace. In addition, dust collection-induced valuable metal loss can be reduced, and carry-over of valuable metals into exhaust gas can also be prevented during the oxidative roasting.

The reductive melting step preferably includes introducing a reducing agent. The reducing agent is preferably carbon and/or carbon monoxide. Carbon has the ability to easily reduce the valuable metals (e.g., Cu, Ni, Co) to be recovered. For example, one mole of carbon can reduce two moles of a valuable metal oxide (e.g., copper oxide, nickel oxide). The reduction technique using carbon or carbon monoxide is much safer than techniques using a reducing metal agent (e.g., a thermit reaction technique using aluminum).

The source of carbon for use as the reducing agent may be graphite, such as artificial graphite or natural graphite, or coal or coke with a level of impurities acceptable for the subsequent steps or the final product. The reductive melting step may also include adding ammonia or carbon monoxide as a reducing agent.

The reducing agent is preferably added in an amount of 0.5 moles or more and 1 mole or less, more preferably 0.6 moles or more and 0.8 moles or less, on a carbon basis, relative to 1 mole of oxides of valuable metals (Cu, Ni, Co).

As a non-limiting example, the reductive melting preferably has a heating temperature of 1,300°C or more and 1,550°C or less, more preferably 1,350°C or more and 1,450°C or less. At a temperature of more than 1,550°C, the reductive melting may waste thermal energy and significantly damage the refractory material, such as the crucible, so that the productivity may decrease. At a temperature of less than 1,300°C, the reductive melting may have a degraded ability to separate alloy and slag so that the valuable metal recovery ratio may decrease.

The reductive melting step preferably includes adding a flux. In this regard, in a case where the preparation step S1 includes adding a flux in the premixing step S13 and preparing flux-containing granules, the reductive melting step may include supplementing a shortage of the flux. The reductive melting step using the flux allows dissolution of a slag, which includes Al oxides and so on, into the flux and allows removal of such oxides.

The flux preferably has a melting point close to that of the alloy and preferably has a high ability to dissolve Al. For example, the flux may be one with a melting point of 1,500°C or less, such as calcium carbonate (CaCO₃), calcium oxide (CaO), aluminum oxide (Al₂O₃), silicon oxide (SiO₂), magnesium oxide (MgO), or iron oxide (e.g., Fe₂O₃). The reductive melting step may further include adding calcium fluoride (CaF₂) or the like, which can efficiently reduce the melting point of the slag and thus reduce energy costs.

The reductive melting may be performed using a known technique. For example, such a technique includes placing the oxidatively roasted product (treatment target) in a crucible; and heating the oxidatively roasted product by resistive heating or any other heating method. In some cases, the reductive melting may generate harmful substances, such as dust and exhaust gas, however, which can be made harmless by known exhaust gas treatment techniques or other techniques.

In the case where the reduction step S3 is preceded by the oxidative roasting step S2, which includes subjecting the granules of the mixed powder to oxidative roasting as described above, the reduction step S3 does not need to include an oxidation treatment. However, even after the oxidative roasting step S2 is performed, the degree of the oxidation may be insufficient or should be further adjusted. In such a case, the reduction step S3 may include an additional oxidation treatment.

In the case where the reduction step S3 includes an oxidation treatment, the reductive melting and the oxidation treatment may be performed simultaneously, for example, by a method of blowing an oxidizing agent into the reductive melting product resulting from the reductive melting. Specifically, such a method may include bubbling the reductive melting product with an oxidizing agent being blown through a metallic tube (lance) inserted in the reductive melting product. In this step, the oxidizing agent may be air, pure oxygen, an oxygen-enriched gas, or any other oxygen-containing gas.

### (4) Slag Separation Step

The slag separation step S4 includes separating the slag from the reductive melting product resulting from the reduction step S3 and recovering a valuable metal-containing alloy. The slag and the alloy have different specific gravities. The slag with a specific gravity lower than that of the alloy tends to gather above the alloy in the reductive melting product and thus can be easily separated and collected by specific gravity separation.

In this way, the slag separation step S4 separates the slag from the reductive melting product and successfully recovers the valuable metal-containing alloy.

The slag separation step may be followed by a sulfurization step including sulfurizing the resulting alloy to form a sulfide and/or a crushing step including crushing the sulfide or the alloy. The valuable metal-containing alloy obtained through the pyrometallurgical process described above may be further subjected to a hydrometallurgical process. The hydrometallurgical process may include removing impurity components; and separating and purifying valuable metals (e.g., Cu, Ni, Co) to recover each of the valuable metals. The hydrometallurgical process may include known techniques such as neutralization and solvent extraction.

### EXAMPLES

Hereinafter, the present invention will be described more specifically with reference to examples, which are not intended to limit the present invention at all.

### [Preparation of Granules from Mixed Powder Including Positive and Negative Electrode Active Materials]

First, a premix was obtained by adding water in the amount shown in Table 2 below to a mixed powder with the composition shown in Table 1 below obtained through crushing discarded lithium ion batteries (a mixed powder including positive and negative electrode active materials); and premixing the water and the mixed powder using Daw Mixer (PX0309 manufactured by Shin-Nichinan Co., Ltd.). In Examples 5 and 6, calcium carbonate with a particle size of 5 mm or less was added as a flux to the materials during the premixing. Table 2 shows the weight ratios of the added water and flux to the mixed powder.

The mixed powder subjected to the premixing was in the form of a fine powder.

**[Table 1]**

| Sample | Content (mass%) | | |
|---|---|---|---|
| | Ni | Cu | C |
| Mixed powder (black mass) | 28.9 | 7 | 31.4 |

Next, the resulting premix was further mixed to form granules using Daw Pelletizer (PT0412 manufactured by Shin-Nichinan Co., Ltd.) with its paddle head peripheral speed set to the value shown in Table 2 below. During the granulation, the mixing was performed for 2 minutes.

In Examples 1 to 8, the content of granules with a diameter of 1 mm or less in the resulting granules was determined. In Examples 4 to 6, the content of granules with a diameter of 4 mm or more was further determined. In Comparison Example 1, no granulation was performed.

**[Table 2]**

| Sample | Water content | Peripheral speed | Flux | Content of granules of 1 mm or less in diameter | Content of granules of 4 mm or more in diameter |
|---|---|---|---|---|---|
| | (weight ratio) | (m/Minutes) | (weight ratio) | (%) | (%) |
| Example 1 | 0.143 | 55.3 | 0 | 7.7 | - |
| Example 2 | 0.146 | 55.3 | 0 | 5.4 | - |
| Example 3 | 0.145 | 71.9 | 0 | 7.3 | - |
| Example 4 | 0.142 | 88.5 | 0 | 7.0 | 22.2 |
| Example 5 | 0.146 | 88.5 | 0.1 | 8.5 | 32.7 |
| Example 6 | 0.143 | 88.5 | 0.2 | 6.5 | 37.6 |
| Example 7 | 0.156 | 27.3 | 0 | Successfully granulated but small in size | - |
| Example 8 | 0.143 | 41.0 | 0 | 40 | - |
| Comparative Example 1 | 0 | 0 | 0 | (Powder) | - |

Table 2 shows that relatively large granules were obtained in Examples 1 to 8 by premixing the mixed powder and then granulating the premix to form granules and that such large granules had higher handleability than the mixed powder (Comparative Example 1) prior to the premixing. Specifically, in Examples 1 to 6, the content of granules with a diameter of 1 mm or less was less than 10%, which means further improved handleability. In Examples 4 to 6, the content of granules with a diameter of 4 mm or more was 30% or more, which means still further improved handleability.

### [Supply of Prepared Granules to Pyrometallurgical Process]

The resulting granules of each of Examples 1 to 8 and the mixed powder of Comparative Example 1 were subjected to oxidative roasting and reductive melting in the valuable metal recovery method based on a pyrometallurgical process.

As a result, a large amount of dust occurred during the oxidative roasting and reductive melting in Comparative Example 1 where the mixed powder including the positive and negative electrode active materials was directly subjected to the pyrometallurgical process (namely, without granulation of the mixed powder). This may be because during the introduction of the mixed powder into the processing furnace, the handling of the mixed powder caused a large amount of dust and because the resulting dust was aspirated and transferred along with the reaction gas and convection flow to the exhaust duct so that a large amount of carry-over occurred.

In contrast to Comparative Example 1, a drastically reduced amount of dust occurred during the oxidative roasting and reductive melting in Examples 1 to 8 where the granules were prepared as shown in Table 2 and supplied to the process. This may be because the granules were supplied with improved handleability so that dust and carry-over were effectively prevented.

In Example 7 or 8, the amount of dust generated was smaller than in Comparative Example 1. In Example 7 or 8, however, the amount of dust was larger than in Examples 1 to 6.

## Claims

1. A valuable metal recovery method comprising:
a preparation step comprising preparing a raw material from discarded lithium ion batteries containing a valuable metal,
the preparation step comprising:
a premixing step comprising adding water to a mixed powder including positive and negative electrode active materials derived from the discarded lithium ion batteries and premixing the water and the mixed powder to form a premix; and
a granulation step comprising further mixing the premix to form granules from the mixed powder.

2. The valuable metal recovery method according to claim 1, wherein in the premixing step, the water is added with an adjusted weight ratio of the water to the mixed powder of 0.14 or more and 0.16 or less.

3. The metal recovery method according to claim 1 or 2, wherein the granulation step comprises mixing and granulating the premix using a twin-shaft paddle granulator with its paddle head peripheral speed set to 50 m/minute or more and 90 m/minute or less.

4. The valuable metal recovery method according to claim 1 or 2,
wherein the valuable metal recovery method further comprises a pyrometallurgical process comprising a reduction step that comprises subjecting, to reductive melting, the granules resulting from the preparation step to form a reductive melting product comprising a valuable metal-containing alloy and a slag,
wherein the premixing step of the preparation step further comprises adding, to the mixed powder, a flux for use in the reductive melting; and subjecting the flux to the premixing.

5. The valuable metal recovery method according to claim 4,
wherein in the premixing step, the flux has a particle size of 5 mm or less and is added with an adjusted weight ratio of the flux to the mixed powder of 0.1 or more and 0.2 or less.
